# EUROPEAN PATENT SPECIFICATION

(11) **EP 3 462 736 B1**
(45) Date of publication and mention of the grant of the patent: **04.11.2020**
(21) Application number: 17194156.0
(22) Date of filing: 29.09.2017
(51) Int. Cl.: H04N 17/00, H04N 17/04, H04N 5/213

(54) **METHOD, APPARATUS AND COMPUTER PROGRAM FOR REDUCING THE EFFECT IN DISPLAYED TV IMAGES OF ELECTROMAGNETIC NOISE**
VERFAHREN, VORRICHTUNG UND COMPUTERPROGRAMM ZUR REDUZIERUNG DER WIRKUNG IN ANGEZEIGTEN FERNSEHBILDERN VON ELEKTROMAGNETISCHEM RAUSCHEN
PROCÉDÉ, APPAREIL ET PROGRAMME INFORMATIQUE PERMETTANT DE RÉDUIRE LES EFFETS D'UN BRUIT ÉLECTROMAGNÉTIQUE DANS DES IMAGES TV AFFICHÉES

(43) Date of publication of application: 03.04.2019
(73) Proprietor: Vestel Elektronik Sanayi ve Ticaret A.S., 45030 Manisa (TR)
(72) Inventor: YILDIZ, Kadir, 45030 Manisa (TR); ER, Alper Sait, 45030 Manisa (TR)
(74) Representative: Kehl, Ascherl, Liebhoff & Ettmayr Patentanwälte Partnerschaft mbB

(56) References cited:
- EP-A1- 1 789 945
- US-A1- 2012 127 324

## Description

### Technical Field

The present disclosure relates to a method, apparatus and computer program for reducing the effect in displayed television images of electromagnetic noise.

### Background

Electromagnetic Compatibility (EMC) testing is important for many electronic products. Tests are available to ensure that products comply with certain standards in electromagnetic terms. Such tests include radio frequency (RF) immunity tests to measure how a product is affected by electromagnetic noise, for example as may be received through electrical conductors used within a product or mixed with signals received from an external signal source, e.g. by means of an antenna.

For televisions in particular, RF tests may conventionally have been applied to a tuner. EMC immunity tests are important tests for televisions and any problems identified by these tests are conventionally solved by hardware changes. In one example technique for resolving such problems, the characteristics of an RF filter provided at a tuner input and output may be changed by altering resistance and capacitance values in the filter circuit.

It may not be easy to make hardware changes to overcome all noise immunity problems. For example, a solution to a noise problem on one channel frequency range may introduce a new problem for another channel on a different frequency range.

US2012127324A1 discloses a method and system using a camera device for characterizing or calibrating a display device during display of one or more test images.

WO2006024698A1 discloses a method for testing the display of an electronic device. A test video comprising images marked with a predetermined identifier is run on the electronic device and the display of the electronic device is imaged.

### Summary

According to a first aspect disclosed herein, there is provided a method for reducing the effect of electromagnetic noise on images displayed by a television, the television having a display, an input for receiving television signals of broadcast TV channels, and a configurable filter for filtering electromagnetic noise from received television signals, the method comprising:
(i) receiving, from a camera directed towards the display, image data representing at least a portion of an image being displayed by the television in accordance with a received television signal;
(ii) analysing the received image data to identify a presence, in the at least a portion of an image being displayed, of one or more of a predetermined set of image artefacts known to result from the presence of electromagnetic noise related to one or more broadcast TV channels in the received television signal;
(iii) determining filter characteristics for the configurable filter for the filter to filter from a received television signal electromagnetic noise corresponding to an image artefact identified at (ii); and
(iv) sending signals to the configurable filter to implement the filter characteristics determined at (iii), thereby to reduce the presence of the identified image artefact related to one or more broadcast TV channels.

By analysing images being displayed, captured by a camera as if being viewed by a user, and by using a system of monitoring that is separate from the internal functionality of the television, the method according to this first aspect is less likely to be affected by the electromagnetic noise that is affecting operation of the television.

In an example, (ii) comprises analysing image data received at (i) in respect of two or more displayed images to identify a presence of an image artefact of the predetermined set of image artefacts.

In an example, at (ii), the set of predetermined image artefacts includes at least one of: mosaic or tiling effects; image distortion; and image oscillation.

In an example, the method comprises:
(v) receiving image data after the configurable filter has implemented the filter characteristics to determine whether the adjustment to the configurable filter has at least reduced the presence of the identified image artefact as compared with the presence identified at (ii).

In an example, the method repeats (ii) to (v) in an iterative process to determine filter characteristics resulting in at least a predetermined reduction in the presence of the image artefact identified at (ii).

In an example, (iii) comprises accessing a data store storing configurable filter characteristics corresponding to each image artefact of the predetermined set of image artefacts.

In an example, the data store stores configurable filter characteristics for a plurality of different television products and (iii) comprises selecting from the configurable filter characteristics stored in the data store for a respective television.

According to a second aspect disclosed herein, there is provided an apparatus for reducing the effect of electromagnetic noise on images displayed by a television on a display, the television having an input for receiving television signals of broadcast TV channels and a configurable filter for use in filtering electromagnetic noise from received television signals to be used for displaying images on the display, the apparatus comprising:
a camera for generating image data representing an image being displayed by at least a portion of the display in accordance with a received television signal; and
a controller configured:
   (i) to receive image data from the camera;
   (ii) to analyse the received image data to identify a presence, in the at least a portion of an image represented in the received image data, of one or more in a predetermined set of image artefacts known to result from the presence of electromagnetic noise related to one or more broadcast TV channels in the received television signal;
   (iii) to determine filter characteristics for the configurable filter for the filter to filter from a received television signal electromagnetic noise corresponding to an image artefact identified at (ii); and
   (iv) to send signals to the configurable filter to implement the determined filter characteristics determined at (iii), thereby to reduce the presence of the identified image artefact related to the one or more broadcast TV channels.

In an example of the apparatus, the controller is configured, at (ii), to analyse image data received at (i) in respect of two or more displayed images to identify a presence of an image artefact in the predetermined set of image artefacts.

In an example of the apparatus, at (ii), the set of predetermined image artefacts includes at least one of: mosaic or tiling effects; image distortion; and image oscillation.

In an example of the apparatus, the controller is configured:
(v) to receive image data after the configurable filter has implemented the filter characteristics to determine whether the adjustment to the configurable filter has at least reduced the presence of the identified image artefact as compared with the presence identified at (ii).

In an example of the apparatus, the controller is configured to repeat (ii) to (v) in an iterative process to determine filter characteristics resulting in at least a predetermined reduction in the presence of the image artefact identified at (ii).

In an example of the apparatus, the controller is configured, a (iii), to access a data store storing configurable filter characteristics corresponding to each image artefact in the predetermined set of image artefacts.

In an example of the apparatus, the data store stores configurable filter characteristics for a plurality of different television products and the controller is configured, at (iii), to select from the configurable filter characteristics stored in the data store for a respective television.

According to a third aspect disclosed herein, there is provided a computer program which when installed upon and executed by a digital processor implements the method as defined above according to the first aspect.

### Brief Description of the Drawings

To assist understanding of the present disclosure and to show how embodiments may be put into effect, reference is made by way of example to the accompanying drawings in which:
Figure 1 shows schematically an example arrangement of components for identifying and reducing the effects of electromagnetic noise in images displayed by a TV according to the present disclosure; and
Figure 2 shows, in a flow diagram, an example process implemented according the present disclosure for identifying and reducing the effects of electromagnetic noise in images displayed by a TV.

### Detailed Description

In one known approach to detecting the effect of electromagnetic noise received by a television (TV) on a broadcast image being displayed by the television, monitoring electronics are installed within the television to analyse image signals being generated to control the display and to compare those generated image signals with a reference signal. However, such techniques are known to have a high error margin, one reason being that the electromagnetic noise that is causing the problem in the generated image may also affect the monitoring equipment being used to determine the extent of the problem, unless the monitoring equipment is very well isolated. Another factor is the use in such monitoring equipment of an estimation method to detect noise, that is, to estimate the noise in the generated image, which is not necessarily an accurate or efficient technique.

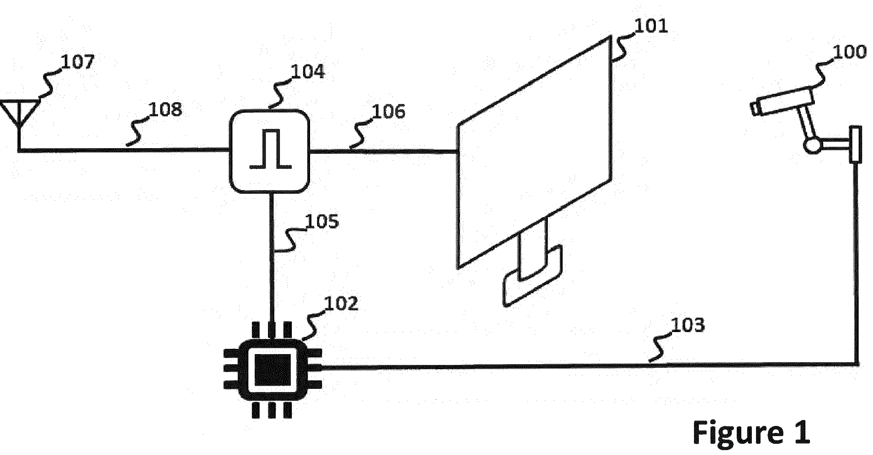

According to an example disclosed herein, a different approach is used to determine the effect upon a generated image of electromagnetic noise and to determine a correction to be made to the filter characteristics of a configurable filter system within the TV to reduce that effect and so improve image quality. This example will now be described initially with reference to Figure 1.

Referring to Figure 1, an example is shown schematically of an arrangement comprising a camera 100 positioned in front of a TV display 101 such that the whole or a portion of the display area is within the field of view of the camera. The camera 100 is linked to a control unit 102 by means of a communication line 103. The control unit 102 comprises a digital processor for executing a computer program or a combination of a digital processor and a configurable hardware logic unit, a memory unit and interfacing circuits arranged to receive image data from the camera 100 and to implement functionality to be described below.

The TV 101 includes a configurable analogue filter system 104 for filtering electromagnetic noise as may be received by an antenna 107 mixed with signals of broadcast TV channels, the received signals being fed to the TV via a cable 108. The filter system 104 may include variable capacitors, in particular one or more digitally tunable variable capacitors, so that the filtering characteristics of the filter system 104 may be varied. The filter system 104 may also include a digital filter having one or more configurable parameters to enable the characteristics of the digital filter to be adjusted. After filtering, the signals are decoded by conventional means and the resultant images and sound are supplied (106) to the TV display 101, including any image artefacts resulting from the presence of any electromagnetic noise that has not been suppressed by the filter system 104.

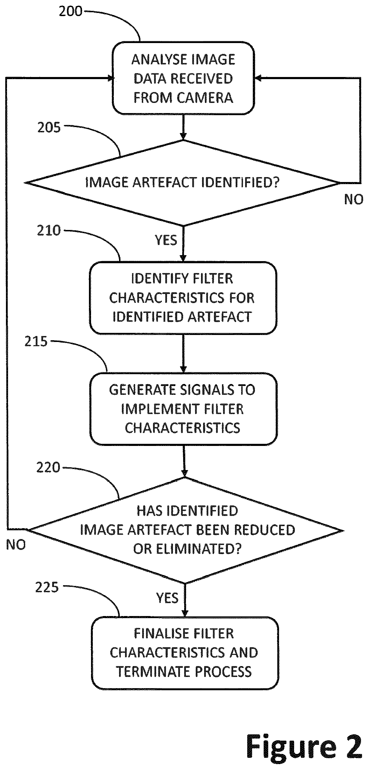

The control unit 102 is linked to the filter system 104 of the TV 101 via a communication line 105 which may be detached from the TV when testing and reconfiguration is complete. The control unit 102 is arranged to communicate with the filter system 104 over the communication line 105, for example using a known serial peripheral interface (SPI) or an I²C interface between the control unit 102 and the filter system 104 via the line 105, to trigger changes to the filtering characteristics of the filter system 104. The changes may be determined by functionality implemented in the control unit 102 based upon analysis by the control unit 102 of the captured images in a process that will now be described additionally with reference to Figure 2.

Referring additionally to Figure 2, the control unit 102 is arranged firstly, at 200, to process image data received from the camera 100 of at least a portion of the TV display 101 to identify one or more undesirable artefacts in the images being displayed. The control unit 102 is arranged to recognise any one of a predetermined set of undesirable image artefacts. For example, the control unit 102 may be arranged to identify undesirable image artefacts such as mosaics, distortion or oscillation in a displayed image. There are a number of known image data processing techniques that may be used to identify the presence of particular artefacts in one or more images represented by those image data. Each image artefact has one or more distinctive characteristics that may be recognised either by analysis of a single image or by analysis of a sequence of images, if necessary by comparison with reference data.

Image data received at 200 may comprise image data of a sequence of images, each captured by the camera 100 over a time period of at least the normally expected minimum period of response of the human eye. This ensures that the images represented in the image data are as they would be perceived by a human user. For a TV display 101 with an image refresh rate of 50Hz, for example, in which the image is refreshed every 20ms, image data for each image may be captured by the camera 100 over a time period of greater that 20ms so that the intended colour and brightness of each pixel is accurately captured by the camera 100. Typically, a sequence of for example ten images may be captured by the camera 100 and analysed at 200 to detect any of the different types of image artefact resulting from electromagnetic noise.

Each type of undesirable image artefact is known to be associated with a particular known type of electromagnetic noise. That is, it is known, or it may be determined by routine experimentation, what type of electromagnetic noise must be present in a received signal at the antenna 107 to result in the particular image artefact being displayed by a particular TV product or by a TV using a known digital display type. The expected response of the TV signal decoding techniques implemented in the TV and of other image-affecting components in the TV to each type of noise is also known. Furthermore, for each undesirable artefact, it is known how the electromagnetic noise causing the artefact to appear relates to the signals of the TV channel being received and displayed, e.g. in terms of the relative frequencies and harmonics of the noise and the differences in signal composition.

With this knowledge, a predetermined set of responses may be defined in terms of the characteristics of the filter system 104 required to suppress or reduce each of the types of noise known to result in respective undesirable display artefacts in a particular TV product. Such responses may be stored in a look-up table in a memory unit for access by the functionality of the control unit 102, or they may be implemented in functionality of the control unit 102. As required, a different set of responses may be defined for each of a number of different TV products or digital display types so that the control unit 102 may be used in testing and configuration of more than one TV product.

Functionality implemented by the control unit 102 is therefore arranged if, at 205, the presence is identified in received image data of a type of one or more undesirable image artefacts, to identify, at 210, the filter characteristics required of the filter system 104 and, at 215, to generate signals for sending to the filter system 104 to adjust the filter characteristics accordingly. The aim of such adjustments is to avoid or to reduce the generation of the identified undesirable image artefact. Therefore, having triggered the adjustments to the filter system 104, the control unit 102 may be arranged, at 220, to check that the identified undesirable image artefact is no longer present or is at least reduced in displayed images by capturing new image data and analysing them again. If, at 220, the identified image artefact has been reduced or eliminated then, at 225, the process may finalise the filter characteristics of the filter system 104 and terminate the process. Otherwise, the process may return to 200 to receive more data from the camera 100 and continue the analysis and adjustment.

Where it is not known what particular filter characteristics will result in correction of an undesirable image artefact, the control unit 102 may be arranged to implement an iterative process of adjustment to the filter system 10 and analysis of images to determine whether an adjustment has resulted in an improvement or a degradation of the displayed images. The control unit 102 may implement a predetermined strategy for iterative adjustment of the filter system 104 to result in an improved image quality for a given electromagnetic noise component in received signals. The iterative process may include receiving different channels and making different adjustments to the filter system 104 for each received channel to obtain an optimal balance of improved image quality across two or more different channels. In this way, adjustments that improve picture for one channel but degrade the image quality for other channels may be avoided or a compromise adjustment may be found to give an overall acceptable result.

When the filter characteristics have been determined, then at 225, a command may be generated by the control unit 102 for sending to the filter system 104 to indicate that the determined filter characteristics are the final characteristics and that the adjustment process is complete.

A significant advantage in determining resultant undesirable image artefacts using a camera 100 and control unit 102 separate from the functionality of the TV 101 is that the camera 100 and control unit 102 are isolated from the electromagnetic noise signals being received by or otherwise penetrating the TV 101. Furthermore, as indicated above, the camera 100 and control unit 102 may be used to configure multiple different TVs of the same type and of different types to improve their electromagnetic noise tolerance and resultant image quality.

It was indicated above that the camera 100 may be positioned to capture a whole of the image being displayed by the TV display 101 or to capture only a portion of the displayed image. It may be beneficial to position the camera 100 to capture only a portion of the displayed image with a higher resolution than may be possible when imaging the whole of the TV display area. This may enable undesirable image artefacts to be identified by the control unit 102 with greater reliability. In particular, where the undesirable artefact is expected to affect an image over the whole of the display area, the artefact may be identified in high quality image data captured from only a portion of the display.

Whereas the functionality of the controller 102 has been described in the context of a controller that is separate from the TV, certain functionality of the controller 102 may be implemented within a TV itself so that only the camera 100 needs to be linked to the TV for the purpose of testing and adjustment.

In yet another arrangement, a camera may be built into the TV to view a small portion of the image area of the display 101 and to capture sufficient image data to be able to identify undesirable image artefacts. This is increasingly feasible with very high definition TV displays, allowing for the sampling of a much smaller portion of a display 101.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory unit for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments.

## Claims

1. A method for reducing the effect of electromagnetic noise on images displayed by a television, the television having a display (101), an input (107, 108) for receiving television signals of broadcast TV channels, and a configurable filter (104) for filtering electromagnetic noise from received television signals, the method comprising:
(i) receiving, from a camera (100) directed towards the display (101), image data representing at least a portion of an image being displayed by the television in accordance with a received television signal;
(ii) analysing the received image data to identify a presence, in the at least a portion of an image being displayed, of one or more of a predetermined set of image artefacts known to result from the presence of electromagnetic noise related to one or more broadcast TV channels in the received television signal;
(iii) determining filter characteristics for the configurable filter (104) to filter from a received television signal electromagnetic noise corresponding to an image artefact identified at (ii); and
(iv) sending signals to the configurable filter (104) to implement the filter characteristics determined at (iii), thereby to reduce the presence of the identified image artefact related to the one or more broadcast TV channels.

2. The method according to claim 1, wherein (ii) comprises analysing image data received at (i) in respect of two or more displayed images to identify a presence of an image artefact of the predetermined set of image artefacts.

3. The method according to claim 1 or claim 2, wherein at (ii) the set of predetermined image artefacts includes at least one of: mosaic or tiling effects; image distortion; and image oscillation.

4. The method according to any one of claims 1 to 3, comprising:
(v) receiving image data after the configurable filter (104) has implemented the filter characteristics to determine whether the adjustment to the configurable filter (104) has at least reduced the presence of the identified image artefact as compared with the presence identified at (ii).

5. The method according to claim 4, comprising repeating (ii) to (v) in an iterative process to determine filter characteristics resulting in at least a predetermined reduction in the presence of the image artefact identified at (ii).

6. The method according to any one of claims 1 to 5, wherein (iii) comprises accessing a data store storing configurable filter characteristics corresponding to each image artefact of the predetermined set of image artefacts.

7. The method according to claim 6, wherein the data store stores configurable filter characteristics for a plurality of different television products and (iii) comprises selecting from the configurable filter characteristics stored in the data store for a respective television.

8. An apparatus for reducing the effect of electromagnetic noise on images displayed by a television, the television having a display (101), an input (107, 108) for receiving television signals of broadcast TV channels, and a configurable filter (104) for use in filtering electromagnetic noise from received television signals to be used for displaying images on the display (101), the apparatus comprising:
a camera (100) directed towards the display (101) for generating image data representing at least a portion of in image being displayed by the display (101) in accordance with a received television signal; and
a controller (102) configured:
(i) to receive image data from the camera (100);
(ii) to analyse the received image data to identify a presence, in the at least a portion of an image being displayed, of one or more of a predetermined set of image artefacts known to result from the presence of electromagnetic noise related to one or more broadcast TV channels in the received television signal;
(iii) to determine filter characteristics for the configurable filter (104) to filter from a received television signal electromagnetic noise corresponding to an image artefact identified at (ii); and
(iv) to send signals to the configurable filter (104) to implement the determined filter characteristics determined at (iii), thereby to reduce the presence of the identified image artefact related to the one or more broadcast TV channels.

9. The apparatus according to claim 8, wherein the controller (102) is configured, at (ii), to analyse image data received at (i) in respect of two or more displayed images to identify a presence of an image artefact of the predetermined set of image artefacts.

10. The apparatus according to claim 8 or claim 9, wherein at (ii) the set of predetermined image artefacts includes at least one of: mosaic or tiling effects; image distortion; and image oscillation.

11. The apparatus according to any one of claims 8 to 10, wherein the controller (102) is configured:
(v) to receive image data after the configurable filter (104) has implemented the filter characteristics to determine whether the adjustment to the configurable filter (104) has at least reduced the presence of the identified image artefact as compared with the presence identified at (ii).

12. The apparatus according to claim 11, wherein the controller (102) is configured to repeat (ii) to (v) in an iterative process to determine filter characteristics resulting in at least a predetermined reduction in the presence of the image artefact identified at (ii).

13. The apparatus according to any one of claims 8 to 12, the controller (102) is configured, a (iii), to access a data store storing configurable filter characteristics corresponding to each image artefact of the predetermined set of image artefacts.

14. The apparatus according to claim 13, wherein the data store stores configurable filter characteristics for a plurality of different television products and the controller (102) is configured, at (iii), to select from the configurable filter characteristics stored in the data store for a respective television.

15. A computer program which when installed upon and executed by a digital processor implements the method according to any one of claims 1 to 7.

## Patentansprüche

1. Ein Verfahren zum Reduzieren der Wirkung von elektromagnetischem Rauschen auf Bilder, die von einem Fernsehgerät angezeigt werden, wobei das Fernsehgerät eine Anzeige (101), einen Eingang (107, 108) zum Empfangen von Fernsehsignalen von Rundfunkfernsehkanälen und ein konfigurierbares Filter (104) zum Filtern von elektromagnetischem Rauschen aus empfangenen Fernsehsignalen aufweist, wobei das Verfahren aufweist:
(i) Empfangen von Bilddaten von einer Kamera (100), die auf die Anzeige (101) gerichtet ist, wobei die Bilddaten mindestens einen Teil eines Bildes darstellen, das von dem Fernsehgerät gemäß einem empfangenen Fernsehsignal angezeigt wird;
(ii) Analysieren der empfangenen Bilddaten, um in dem mindestens einen Teil eines angezeigten Bildes das Vorhandensein eines oder mehrerer Bildartefakte eines vorbestimmten Satzes von Bildartefakten zu identifizieren, von denen bekannt ist, dass sie aus dem Vorhandensein von elektromagnetischem Rauschen resultieren, das sich auf einen oder mehrere Rundfunkfernsehkanäle in dem empfangenen Fernsehsignal bezieht;
(iii) Bestimmen von Filtereigenschaften für das konfigurierbare Filter (104), um aus einem empfangenen Fernsehsignal elektromagnetisches Rauschen zu filtern, das einem bei (ii) identifizierten Bildartefakt entspricht; und
(iv) Senden von Signalen an das konfigurierbare Filter (104), um die unter (iii) bestimmten Filtereigenschaften zu implementieren und dadurch das Vorhandensein des identifizierten Bildartefakts in Bezug auf einen oder mehrere Fernsehkanäle zu reduzieren.

2. Das Verfahren nach Anspruch 1, wobei (ii) das Analysieren von bei (i) empfangenen Bilddaten in Bezug auf zwei oder mehr angezeigte Bilder umfasst, um ein Vorhandensein eines Bildartefakts des vorbestimmten Satzes von Bildartefakten zu identifizieren.

3. Das Verfahren nach Anspruch 1 oder Anspruch 2, wobei bei (ii) der Satz vorbestimmter Bildartefakte mindestens einen der folgenden Effekte einschließt: Mosaik- oder Kachelungseffekte; Bildverzerrung; und Bildoszillation.

4. Das Verfahren nach einem der Ansprüche 1 bis 3, umfassend:
(v) Empfangen von Bilddaten, nachdem das konfigurierbare Filter (104) die Filtereigenschaften implementiert hat, um zu bestimmen, ob die Einstellung des konfigurierbaren Filters (104) zumindest das Vorhandensein des identifizierten Bildartefakts im Vergleich zu dem bei (ii) identifizierten Vorhandensein reduziert hat.

5. Das Verfahren nach Anspruch 4, umfassend das Wiederholen von (ii) bis (v) in einem iterativen Prozess, um Filtercharakteristika zu bestimmen, die zu mindestens einer vorbestimmten Reduktion des Vorhandenseins des bei (ii) identifizierten Bildartefakts führen.

6. Das Verfahren nach einem der Ansprüche 1 bis 5, wobei (iii) den Zugriff auf einen Datenspeicher umfasst, der konfigurierbare Filtercharakteristiken speichert, die jedem Bildartefakt des vorbestimmten Satzes von Bildartefakten entsprechen.

7. Das Verfahren nach Anspruch 6, wobei der Datenspeicher konfigurierbare Filtercharakteristiken für eine Vielzahl von verschiedenen Fernsehprodukten speichert und (iii) das Auswählen aus den in dem Datenspeicher gespeicherten konfigurierbaren Filtercharakteristiken für ein jeweiliges Fernsehgerät umfasst.

8. Eine Vorrichtung zum Reduzieren der Wirkung von elektromagnetischem Rauschen auf Bilder, die von einem Fernsehgerät angezeigt werden, wobei das Fernsehgerät eine Anzeige (101), einen Eingang (107, 108) zum Empfangen von Fernsehsignalen von Rundfunkfernsehkanälen und ein konfigurierbares Filter (104) zur Verwendung beim Filtern von elektromagnetischem Rauschen aus empfangenen Fernsehsignalen aufweist, das zum Anzeigen von Bildern auf der Anzeige (101) verwendet werden soll, wobei die Vorrichtung aufweist:
eine Kamera (100), die auf die Anzeige (101) gerichtet ist, um Bilddaten zu erzeugen, die mindestens einen Teil eines Bildes darstellen, das von der Anzeige (101) gemäß einem empfangenen Fernsehsignal angezeigt wird; und
einen Controller (102), welcher konfiguriert ist:
(i) zum Empfangen von Bilddaten von der Kamera (100);
(ii) die empfangenen Bilddaten zu analysieren, um ein Vorhandensein von einem oder mehreren eines vorbestimmten Satzes von Bildartefakten in mindestens einem Teil eines dargestellten Bildes zu identifizieren, von denen bekannt ist, dass sie aus dem Vorhandensein von elektromagnetischem Rauschen resultieren, das mit einem oder mehreren Rundfunkfernsehkanälen im empfangenen Fernsehsignal zusammenhängt;
(iii) zum Bestimmen von Filtercharakteristiken für das konfigurierbare Filter (104), um aus einem empfangenen Fernsehsignal elektromagnetisches Rauschen zu filtern, das einem bei (ii) identifizierten Bildartefakt entspricht; und
(iv) Signale an den konfigurierbaren Filter (104) zu senden, um die unter (iii) bestimmten Filter Charakteristika zu implementieren und dadurch das Vorhandensein des identifizierten Bildartefakts in Bezug auf den einen oder die mehreren Fernsehsender zu reduzieren.

9. Die Vorrichtung nach Anspruch 8, wobei der Controller (102) so konfiguriert ist, dass er bei (ii) die bei (i) empfangenen Bilddaten in Bezug auf zwei oder mehr angezeigte Bilder analysiert, um das Vorhandensein eines Bildartefakts des vorbestimmten Satzes von Bildartefakten zu identifizieren.

10. Die Vorrichtung nach Anspruch 8 oder 9, wobei bei (ii) der Satz vorbestimmter Bildartefakte mindestens eines der folgenden Merkmale aufweist: Mosaik- oder Kachelungseffekte; Bildverzerrung; und Bildoszillation.

11. Die Vorrichtung nach einem der Ansprüche 8 bis 10, wobei der Controller (102) konfiguriert ist:
(v) zum Empfangen von Bilddaten, nachdem der konfigurierbare Filter (104) die Filtercharakteristika implementiert hat, um zu bestimmen, ob die Anpassung an da konfigurierbare Filter (104) zumindest das Vorhandensein des identifizierten Bildartefakts im Vergleich zu dem bei (ii) identifizierten Vorhandensein reduziert hat.

12. Die Vorrichtung nach Anspruch 11, wobei die Steuereinheit (102) so konfiguriert ist, dass sie (ii) bis (v) in einem iterativen Prozess wiederholt, um Filtercharakteristika zu bestimmen, die zu mindestens einer vorbestimmten Reduzierung des Vorhandenseins des bei (ii) identifizierten Bildartefakts führen.

13. Die Vorrichtung nach einem der Ansprüche 8 bis 12, wobei die Steuereinheit (102) konfiguriert ist, bei (iii) auf einen Datenspeicher zuzugreifen, der konfigurierbare Filtercharakteristiken speichert, die jedem Bildartefakt des vorbestimmten Satzes von Bildartefakten entsprechen.

14. Die Vorrichtung nach Anspruch 13, wobei der Datenspeicher konfigurierbare Filtercharakteristiken für eine Vielzahl von verschiedenen Fernsehprodukten speichert und die Steuereinheit (102) bei (iii) konfiguriert ist, um aus den in dem Datenspeicher gespeicherten konfigurierbaren Filtercharakteristiken für ein jeweiliges Fernsehgerät auszuwählen.

15. Ein Computerprogramm, das, wenn es auf einem digitalen Prozessor installiert und von diesem ausgeführt wird, das Verfahren gemäß einem der Ansprüche 1 bis 7 implementiert.

## Revendications

1. Procédé pour réduire l'effet du bruit électromagnétique sur les images affichées par une télévision, la télévision ayant un écran (101), une entrée (107, 108) pour recevoir des signaux de télévision de chaînes de télévision diffusées, et un filtre configurable (104) pour filtrer le bruit électromagnétique des signaux de télévision reçus, le procédé comprenant :
(i) la réception, à partir d'une caméra (100) dirigée vers l'affichage (101), de données d'image représentant au moins une partie d'une image affichée par le téléviseur conformément à un signal de télévision reçu ;
(ii) l'analyse des données d'image reçues pour identifier la présence, dans au moins une partie d'une image affichée, d'un ou de plusieurs artefacts d'image prédéterminés connus pour résulter de la présence de bruit électromagnétique i lié à une ou plusieurs chaînes de télévision diffusées dans le signal de télévision reçu
signal de télévision ;
(iii) déterminer les caractéristiques du filtre configurable (104) pour filtrer d'un signal de télévision reçu le bruit électromagnétique correspondant à un artefact d'image identifié au point (ii) ; et
(iv) l'envoi de signaux au filtre configurable (104) pour mettre en œuvre les caractéristiques du filtre déterminées au point (iii), afin de réduire la présence de l'artefact d'image identifié lié à une ou plusieurs chaînes de télévision diffusées.

2. Procédé selon la revendication 1, dans lequel (ii) comprend l'analyse des données d'image reçues au point (i) en ce qui concerne deux ou plusieurs images affichées pour identifier la présence d'un artefact d'image de l'ensemble prédéterminé d'artefacts d'image.

3. Procédé selon la revendication 1 ou la revendication 2, dans lequel en (ii) l'ensemble d'artefacts d'image prédéterminés comprend au moins un des éléments suivants : effets de mosaïque ou de carrelage ; distorsion d'image ; et oscillation d'image.

4. Procédé selon l'une quelconque des revendications 1 à 3, comprenant :
(v) la réception de données d'image après que le filtre configurable (104) a mis en oeuvre les caractéristiques du filtre pour déterminer si le réglage du filtre configurable (104) a au moins réduit la présence de l'artefact d'image identifié par rapport à la présence identifiée au point (ii).

5. Procédé selon la revendication 4, comprenant la répétition des points (ii) à (v) dans un processus itératif pour déterminer les caractéristiques du filtre résultant en au moins une réduction prédéterminée de la présence de l'artefact d'image identifié au point (ii).

6. Procédé selon l'une quelconque des revendications 1 à 5, dans lequel (iii) comprend l'accès à une mémoire de données stockant des caractéristiques de filtre configurables correspondant à chaque artefact d'image de l'ensemble prédéterminé d'artefacts d'image.

7. Procédé selon la revendication 6, dans lequel la mémoire de données stocke des caractéristiques de filtre configurables pour une pluralité de produits de télévision différents et (iii) comprend la sélection à partir des caractéristiques de filtre configurables stockées dans la mémoire de données pour une télévision respective.

8. Appareil pour réduire l'effet du bruit électromagnétique sur les images affichées par une télévision, la télévision ayant un affichage (101), une entrée (107, 108) pour recevoir des signaux de télévision de canaux de télévision diffusés, et un filtre configurable (104) pour utilisation dans le filtrage du bruit électromagnétique des signaux de télévision reçus à utiliser pour afficher des images sur l'affichage (101), l'appareil comprenant :
une caméra (100) dirigée vers l'affichage (101) pour générer des données d'image représentant au moins une partie d'une image affichée par l'affichage (101) conformément à un signal de télévision reçu ; et
un contrôleur (102) configuré :
(i) pour recevoir les données d'image de la caméra (100) ;
(ii) pour analyser les données d'image reçues afin d'identifier la présence, dans au moins une partie de l'image j affichée, 3f d'un ou plusieurs d'un ensemble prédéterminé de < artefacts d'image connus pour résulter de la présence de bruit électromagnétique lié à une ou plusieurs chaînes de télévision diffusées dans le signal de télévision reçu ;
(iii) déterminer les caractéristiques du filtre configurable (104) pour filtrer d'un signal de télévision reçu le bruit électromagnétique correspondant à ; un artefact d'image identifié au point (ii) ; et
(iv) d'envoyer des signaux au filtre configurable (104) pour mettre en œuvre les caractéristiques du filtre i déterminées au point (iii), afin de réduire la présence de l'artefact d'image identifié lié à une ou plusieurs chaînes de télévision diffusées.

9. Appareil selon la revendication 8, dans lequel le contrôleur (102) est configuré, en (ii), pour analyser les données d'image reçues en (i) concernant deux ou plusieurs images affichées afin d'identifier la présence d'un artefact d'image de l'ensemble prédéterminé d'artefacts d'image.

10. Appareil selon la revendication 8 ou la revendication 9, dans lequel, en (ii), l'ensemble d'artefacts d'image prédéterminés comprend au moins un des éléments suivants : effets de mosaïque ou de carrelage ; distorsion d'image ; et oscillation d'image.

11. L'appareil selon l'une quelconque des revendications 8 à 10, dans lequel le contrôleur (102) est configuré :
(v) pour recevoir des données d'image après que le filtre configurable (104) a mis en oeuvre les caractéristiques du filtre pour déterminer si le réglage du filtre configurable (104) a au moins réduit la présence de l'artefact d'image identifié par rapport à la présence identifiée au point (ii).

12. L'appareil selon la revendication 11, dans lequel le contrôleur (102) est configuré pour répéter les points (ii) à (v) dans un processus itératif pour déterminer les caractéristiques du filtre résultant en au moins une réduction prédéterminée de la présence de l'artefact d'image identifié au point (ii).

13. L'appareil selon l'une quelconque des revendications 8 à 12, le contrôleur (102) est configuré, a (iii), pour accéder à une mémoire de données stockant des caractéristiques de filtre configurables correspondant à chaque artefact d'image de l'ensemble prédéterminé d'artefacts d'image.

14. L'appareil selon la revendication 13, dans lequel la mémoire de données stocke des caractéristiques de filtre configurables pour une pluralité de produits de télévision différents et le contrôleur (102) est configuré, a (iii), pour sélectionner parmi les caractéristiques de filtre configurables stockées dans la mémoire de données pour une télévision respective.

15. Un programme informatique qui, lorsqu'il est installé sur un processeur numérique et exécuté par celui-ci, met en oeuvre la méthode selon l'une quelconque des revendications 1 à 7.
